# EUROPÄISCHE PATENTSCHRIFT

(11) **EP 0 592 057 B1**
(45) Veröffentlichungstag und Bekanntmachung des Hinweises auf die Patenterteilung: **08.10.1997**
(21) Anmeldenummer: 93250141.4
(22) Anmeldetag: 13.05.1993
(51) Int. Cl.: C10G 1/10, C10B 53/00

(54) **Verfahren zur Pyrolyse von organischen Abfallstoffen**
Process for the pyrolysis of organic wastes
Procédé de pyrolyse de déchets organiques

(30) Priorität: 06.10.1992 DE 4234385
(43) Veröffentlichungstag der Anmeldung: 13.04.1994
(73) Patentinhaber: FORMEX TRADING GmbH, 27721 Ritterhude (DE)
(72) Erfinder: Jagau, Hermann Herbert Wilhelm, W-2110 Buchholz (DE); Schimko, Richard, Prof. Dr., O-1020 Belin (DE)
(74) Vertreter: Christiansen, Henning, Dipl.-Ing.

(56) Entgegenhaltungen:
- EP-A- 0 024 250
- EP-A- 0 226 895
- US-A- 4 050 904
- US-A- 4 931 171
- PATENT ABSTRACTS OF JAPAN vol. 008, no. 246 (C-251)10. November 1984 & JP-A-59 124 992 (SANKIYOU YUUKI KK) 19. Juli 1984

## Beschreibung

Die Erfindung betrifft ein Verfahren der im Oberbegriff des Anspruchs 1 angegebenen Art sowie eine Vorrichtung zur Durchführung des Verfahrens.

Der Anfall organischer Abfallstoffe, vorzugsweise gebrauchter Fahrzeugreifen, steigt ständig und hat einen Umfang erreicht, der eine Deponierung dieser Abfallstoffe nicht mehr in ausreichendem Maße zuläßt. Außerdem ist eine Deponierung dieser Stoffe problematisch, da sich unter ungünstigen Umständen Verunreinigungen des Grundwassers durch Auswaschungen der Abfallstoffe ergeben können, die möglicherweise irreparable Schäden nach sich ziehen. Ein weiterer Nachteil der Deponierung dieser Stoffe besteht darin, daß es sich hierbei teilweise um wertvolle Materialien handelt, die durch eine geeignete Wiederaufbereitung zu Wertstoffen umgewandelt und auf diese Weise in den Rohstoffkreislauf zurückgeführt werden können.

Aus diesem Grunde werden seit einiger Zeit Anstrengungen unternommen, diese Abfälle in geeigneten Pyrolyseanlagen zu zersetzen. In einigen Fällen wird der bei der Pyrolyse freiwerdende Brennstoff (feste, flüssige und gasförmige Gemische) teilweise oder vollständig dazu benutzt, die für die Pyrolyse aufzuwendende Wärme durch Verbrennung zu erzeugen. Derartige Verfahren werden beispielsweise in den Druckschriften DE-A-2 219 227, FR-7 435 040, EP-A-0 024 250 und DE-A-3 614 048 beschrieben.

Weitere Bemühungen gehen dahin, die in diesen Abfällen häufig vorkommenden Begleitelemente wie Schwefel, der sich beispielsweise in Fahrzeugreifen zur Vulkanisation befindet, Chlor oder toxische Metalle wie Antimon, Vanadin oder Blei in den die Reaktion begleitenden Feststoffen zu binden, so daß sie nicht in die Atmosphäre entweichen können bzw. vermieden wird, daß aufwendige Reinigungsprozesse für die flüchtigen Bestandteile vorgesehen werden müssen. In EP-A-0 070 789 ist ein Verfahren beschrieben, bei dem diese Elemente in dem für die Pyrolyse eingesetzten Salzbad aus Alkali- und Erdalkalihydroxiden und -oxiden durch chemische Reaktion absorbiert werden.

Eine andere Möglichkeit der Verfahrensführung besteht darin, bei der Pyrolyse feste, flüssige und gasförmige organische Grundstoffe herzustellen. Diese chemischen Gemische können entweder zur Wärmegewinnung durch Verbrennung oder nach einer weiteren Aufarbeitung der Gemische, beispielsweise durch eine Destillation, zur chemischen Synthese eingesetzt werden. Besonders wertvoll sind ungesättigte Kohlenwasserstoffe, wie Alkene und Aromaten, da diese direkt für chemische Synthesen einsetzbar sind.

Ruße, die ebenfalls bei diesen Prozessen entstehen, werden beispielsweise als Füllstoffe in Elastomeren, insbesondere in Fahrzeugreifen, als Pigmente in Farben, Lacken, Kunststoffen und in Elektrophotographierverfahren oder als Elektroden in Batterien verwendet. In der EP-A-0 025 019 ist ein Verfahren beschrieben, in dem in hintereinander geschalteten Pyrolyseanlagen unterschiedliche Pyrolysetemperaturen eingestellt und die Produktgemische, die in den einzelnen Teilanlagen entstehen, separat abgeführt werden. Dadurch wird der Aufwand bei der notwendigen Aufarbeitung der Produktgemische verringert.

In der FR-7 435 040 wird ein Verfahren beschrieben, bei dem die Pyrolyse von gebrauchten Fahrzeugreifen unter Luftausschluß erfolgt. Hierbei wird bei reduziertem Druck und in einer Ausführungsform unter Einspeisung von überhitztem Wasserdampf in den Reaktor gearbeitet. Allerdings wird das hierbei entstehende Produktgas durch den Wasserdampf verunreinigt und muß in einem Reinigungsverfahren wieder entfernt werden.

Alle genannten Verfahren und Vorrichtungen zur Durchführung der Verfahren haben den gemeinsamen Nachteil, daß das entstehende Produktgemisch minderwertig ist und nur relativ geringe Mengen hochwertiger Fraktionen wie beispielsweise Benzin und Kerosin enthält. Meist werden je nach Reaktionsführung überwiegend höhere Anteile gasförmiger Produkte wie Methan und Ethan erhalten. Der entstehende Kohlenstoff ist zudem meist von minderer Qualität.

Der Erfindung liegt die Aufgabe zugrunde, bei einem Verfahren gemäß EP-A-0 024 250 eine möglichst vollständige Umsetzung der Altstoffe in wiederverwertbare und möglichst reine Rohstoffe zu erreichen, sowie eine entsprechende Vorrichtung anzugeben.

Diese Aufgabe wird mit den Merkmalen des Anspruchs 1 bzw. des Anspruchs 11 gelöst.

Das erfindungsgemäße Verfahren zeichnet sich insbesondere dadurch aus,
- daß die organischen Abfallstoffe, vorzugsweise gebrauchte Fahrzeugreifen, einer Pyrolyse in einem Metallbad unter reduziertem Druck und unter Luft- und Wasserausschluß unterworfen werden,
- daß das hierbei entstehende Pyrolyse-Gasgemisch nach der Abkühlung in eine gasförmige und eine flüssige Phase getrennt wird und
- daß ein Teil der gasförmigen Phase anschließend wieder in den Gasraum über dem Pyrolysebad zurückgeführt wird und wahlweise kontinuierlich oder intermittierend ein Inertgas, wie beispielsweise Stickstoff, in den Gasraum über dem Pyrolysebad eingeleitet wird.

Durch die kontrollierte Führung der gasförmigen Phase über dem Reaktor, in dem die Pyrolyse stattfindet, läßt sich das Verfahren durch die Geschwindigkeit der Gaszuführung derart steuern, daß die aus dem Bad in die Gasatmosphäre über dem Bad überführten, der Verwertung zuzuführenden Rohstoffe, hinsichtlich ihrer Zusammensetzung ein Optimum und hinsichtlich ihrer Reinheit ein Maximum erreichen. Hierbei dient insbesondere ein großer Gasdurchsatz der Verringerung des Kohlenstoffanteils an den Reaktionsprodukten und der Heraufsetzung des Anteils an hochmolekularen Kohlenwasserstoffen im Bereich der Heizölfraktionen im Vergleich zu den gasförmigen Bestandteilen.

Damit läßt sich insbesondere eine bessere Produktqualität erreichen, die sich unter anderem auch durch einen höheren Anteil flüssiger Fraktionen, einen niedrigeren Gehalt gasförmiger Produkte und eine höhere Reinheit des ebenfalls entstehenden Kohlenstoffs auszeichnet.

Eine bevorzugte Ausführungsform besteht darin, daß als Pyrolysebad ein Metallbad, vorzugsweise bestehend aus Zinn, Blei oder Zink, insbesondere Zinn oder Blei und in einer anderen günstigen Ausführungsform aus einer Legierung, die Zinn und Blei zusammen - insbesondere in einem Verhältnis von etwa 60 zu 40 - enthält, verwendet wird. In einer anderen bevorzugten Ausführung wird Zinn in einer Legierung mit Zink - insbesondere in einem Verhältnis von etwa 90 zu 10 - eingesetzt.

Die Erfindung schließt die Erkenntnis ein, daß eine Verbesserung der erzielbaren Produktqualität insbesondere durch eine Rückführung der abgekühlten Gasströme in den Pyrolyse-Reaktor erzielt werden kann. Hierbei werden die in der Gasphase über dem Pyrolysebad befindlichen Produktgase durch die niedrigere Temperatur im Gasraum schnell abgekühlt, so daß die Pyrolysereaktion entsprechend verlangsamt ist und somit auch Kohlenwasserstoffe mit höherem Molekulargewicht in höherem Anteil erhalten werden. Außerdem ist auch die Verweilzeit des erzeugten Produktgases im Gasraum des Reaktors ausschlaggebend für die Produktqualität, da die Abkühlung der erzeugten Gase und damit der Abbruch der Pyrolysereaktion umso schneller erfolgt, je schneller diese aus dem Gasraum entfernt werden können. Damit läßt sich über den Parameter der Geschwindigkeit der (Rück-)führung des Gasstroms über dem Pyrolysebad ein in weiten Grenzen einstellbarer Reaktionsverlauf erzielen, bei dem - unter Berücksichtigung der Zusammensetzung der aufzubereitenden Altstoffe - das herzustellende Verfahrenserzeugnis in seiner Zusammensetzung variierbar ist.

Andere vorteilhafte Weiterbildungen der Erfindung sind in den Unteransprüchen gekennzeichnet bzw. werden nachstehend zusammen mit der Beschreibung der bevorzugten Ausführungsformen der Erfindung anhand der Figuren näher dargestellt:

Figur 1 zeigt eine bevorzugte Ausführungsform einer Vorrichtung zur Durchführung des erfindungsgemäßen Verfahrens für den Chargenbetrieb in schematischer Darstellung.

Figur 2 zeigt eine andere bevorzugte Ausführungsform der erfindungsgemäßen Vorrichtung für den kontinuierlichen Pyrolysebetrieb.

Figur 3 zeigt eine weitere bevorzugte Ausführungsform für den kontinuierlichen Betrieb mit unterschiedlichen Einrichtungen für den Transport der Abfallstoffe in der lyseanlage in schematischer Darstellung.

Figur 4 zeigt eine andere bevorzugte Ausführungsform für den kontinuierlichen Betrieb, bei der der Transport des zu pyrolysierenden Materials durch die Pyrolysekammer mittels eines speziell gestalteten Förderbandes erfolgt.

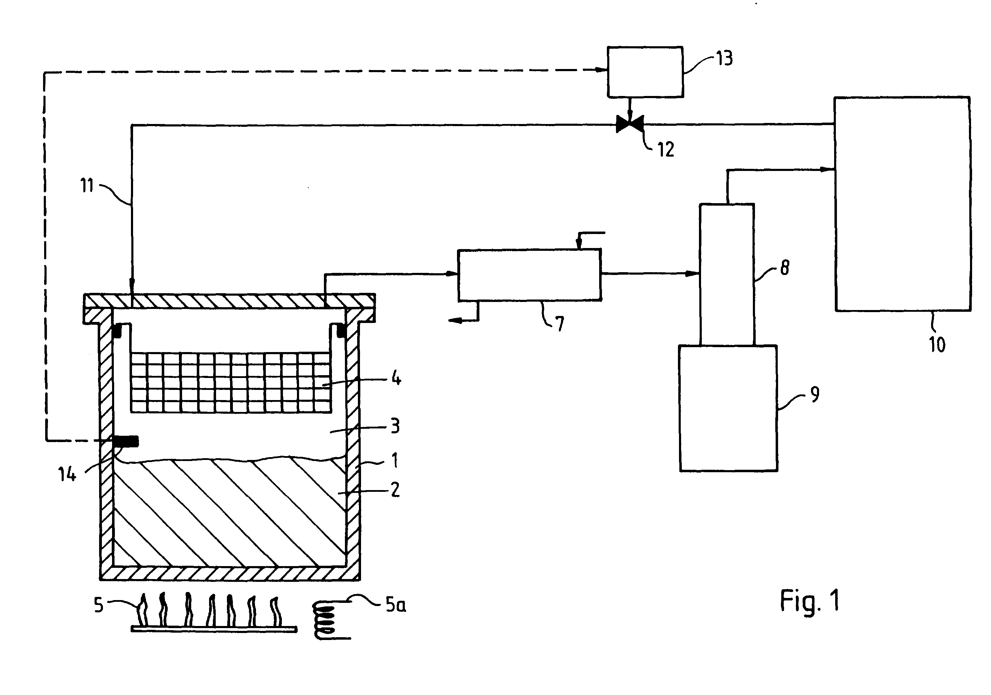

In Figur 1 ist ein erstes Ausführungsbeispiel einer einfachen Anlage für die Pyrolyse kleiner Abfallmengen dargestellt. Die Fahrzeugreifen oder anderen organischen Abfallstoffe werden zunächst zerkleinert, um Abschnitte von etwa 6 x 6 cm Kantenlänge herzustellen. Es hat sich gezeigt, daß die Pyrolyse größerer Teile langsamer verläuft, während kleinere Abschnitte schwieriger zu handhaben sind. Das spezifische Schüttgewicht der Reifenabschnitte liegt etwa bei 0,54 g/cm³.

Die Abschnitte werden in einen Korb 4 gefüllt, der in den Autoklaven 1 so eingeführt wird, daß er im Gasraum 3 über dem Pyrolysebad 2 hängt. Nach dem Verschließen des Autoklaven wird das Pyrolysebad durch ein Brennersystem 5 erhitzt. Hierzu kann ein Teil des gasförmigen Produktgemisches verwendet werden. Alternativ kann auch eine elektrische Heizung 5a eingesetzt werden. Die Temperatur des Pyrolysebades kann in weiten Grenzen variiert werden. Es hat sich jedoch herausgestellt, daß eine Temperatur im Bereich von 450 bis 550°C, vorzugsweise unter 500°C und in einer optimalen Variante zwischen 475 und 485°C, zur Erzeugung einer besonders guten Produktqualität geeignet ist.

Die optimale Temperatur ergibt sich aus der gewünschten Produktzusammensetzung. Hierbei ist eine vorteilhafte Einwirkungsmöglichkeit auf das Verfahren in der Art möglich, daß je niedriger die Temperatur eingestellt wird, der Anteil der Verbindungen mit einem höheren Molekulargewicht umso höher ist. Da mit einer relativ geringen Temperatur gearbeitet wird, ist der Verlust des Metalls durch Verdampfung oder Reaktion mit Bestandteilen des zu pyrolysierenden Gutes, beispielsweise Schwefel, unwesentlich. Bei niedrigeren als den angegebenen Temperaturen verläuft die Pyrolysereaktion jedoch zu langsam, so daß der Prozeß unwirtschaftlich wird.

Während des Aufheizvorgangs wird das Pyrolysegut vorgewärmt und erreicht vor dem Eintauchen in das Pyrolysebad bereits eine erhöhte Temperatur. Ist die Arbeitstemperatur des Pyrolysebades durch einen zuvor durchgeführten Pyrolysezyklus bereits erreicht, so wird das Pyrolysegut vor dem Eintauchen in das Pyrolysebad erst vorgewärmt, um eine Temperatur von bis zu 100°C zu erreichen. Dies ist im Sinne einer optimalen Produktqualität erforderlich und ermöglicht eine größere Homogenität des Pyrolysebades durch gezielte Zuführung der Abfallstoffe mit einer erhöhten Temperatur.

Die Vorwärmung des Gutes kann außerdem indirekt über eine Erwärmung von außen oder durch eine Energiezufuhr über ein Magnetron vom Inneren des Pyrolysegutes heraus erfolgen. Allerdings muß in diesem Fall berücksichtigt werden, daß meist Stahleinlagen in den Fahrzeugreifen verwendet werden, für die diese Art der Energiezufuhr Probleme bereitet. In vorteilhafter Weise können die genannten Methoden gegebenenfalls auch auf parallelen Verarbeitungswegen oder in Hintereinanderschaltung kombiniert werden.

Um sauerstoff- und wasserfrei arbeiten zu können, wird der Gasraum im Autoklaven mit einer Vorvakuumpumpe evakuiert. Der hierbei entstehende Druck liegt bei etwa 0,7 bis 0,8 mBar. Es kann jedoch auch ein höherer Druck eingestellt werden. Anschließend kann ein inertes Gas, spielsweise Stickstoff, in den Autoklaven eingeleitet werden, so daß sich ein Druck zwischen dem Vorvakuumbereich und dem Atmosphärendruck einstellt. Während des Betriebes wird außerdem entsprechend der Erfindung ein Teil des Produktgases in den Autoklaven-Gasraum zurückgeleitet. Daher ist die Einleitung von Stickstoff in den Reaktor nur beim Anfahren der Anlage sinnvoll und erforderlich. Steht eine ausreichende Menge des Produktgases zur Verfügung, so wird der Druck im Gasraum lediglich durch die Gasrückleitung aufrecht erhalten, so daß in diesem Fall kein Stickstoff mehr in den Gasraum eingeleitet werden muß. Gegebenenfalls wird auch bei dem durch das Vorvakuum erreichten Druck gearbeitet, so daß in diesem Fall eine Stickstoffspülung lediglich zur Erzeugung eines luft- und wasserfreien Gasraumes erforderlich ist.

Beim Pyrolysebad handelt es sich um ein Metallbad, bestehend beispielsweise aus Zinn, Blei, Zink oder deren Legierungen, vorzugsweise aus Zinn oder Blei und in einer besonderen Ausführungsform aus einer Legierung, die Zinn und Blei nebeneinander enthält.

In einer bevorzugten Ausführungsform wird ein Gemisch aus Zinn und Blei im Verhältnis von etwa 60 Gew.-Teilen Zinn und 40 Gew.-Teilen Blei, das ungefähr der eutektischen Mischung dieses Legierungssystems mit einem Schmelzpunkt von 183°C entspricht, eingesetzt. In weiteren bevorzugten Ausführungsformen wird eine Legierung von Zinn mit Zink mit etwa 90 Gew.-Teilen Zinn und 10 Gew.-Teilen Zink, das ebenfalls ungefähr der eutektischen Mischung dieses Legierungssystems mit einem Schmelzpunkt von 198°C entspricht, oder eine Legierung aus Zink und Blei verwendet.

Wenn die Arbeitstemperatur des Pyrolysebades erreicht ist, wird der das Pyrolysegut enthaltende Korb in das Bad eingetaucht, um die Reaktion in Gang zu setzen. Nach etwa einer Minute beginnt die Gasentwicklung. Durch die Pyrolyse werden die organischen Abfallstoffe in bei Raumtemperatur gasförmige, flüssige und feste Produkte umgewandelt. Die Reaktionsdauer beträgt zwischen 10 und 14 Minuten. Die Feststoffe, die aus Kohlenstoff und gegebenenfalls aus Stahlgewebe, das von der Reifenverstärkung herrührt, bestehen, verbleiben zum großen Teil in dem Korb und können nach der Pyrolyse gesondert gesammelt werden.

Die gasförmigen Produkte werden aus dem Gasraum des Autoklaven kontinuierlich abgezogen und werden in einem Kondensator 7 abgekühlt. Anschließend wird das Produktgemisch in eine Kühlkolonne 8 eingeleitet, von der aus die Flüssigfraktion in den Behälter 9 gelangt. Aus einem Kilogramm gebrauchter Fahrzeugreifen entstehen auf diese Weise 0,5 bis 0,6 Liter Öl.

Das zurückbleibende Gasgemisch besteht aus Methan und Ethan im Verhältnis von etwa 8 zu 1. Die Gase werden in den Gasometer 10 eingeleitet und dort zwischengespeichert.

Entsprechend der Erfindung wird der gasförmige Anteil des Produktgemisches über eine Zuführung 11 in den Gasraum über dem Pyrolysebad zurückgeleitet. Der Volumenstrom des rückgeführten Gases wird mittels des Ventils 12, das über eine Regeleinheit 13 gesteuert werden kann, eingestellt. Je nach gewünschtem Druck oder gewählter Temperatur des Gasraumes über dem Pyrolysebad und erhaltener Produktzusammensetzung wird der Volumenstrom über die Pumpe variiert. Hierzu dient ein Druck- oder Temperatursensor 14, der in Höhe des Gasraumes im Autoklaven angebracht ist.

Die Charakterisierung der Produktzusammensetzung kann über die Bestimmung des Mengenverhältnisses der bei Raumtemperatur gasförmigen zu den flüssigen Produkten erfolgen. Außerdem können chromatographische Analysenverfahren, wie beispielsweise die Messung der Wärmeleitfähigkeit, oder spektroskopische Methoden eingesetzt werden. Bei einer teil- oder vollautomatischen Prozeßführung werden die Ausgangsgrößen dieser Meßgeräte, welche kontinuierlich im Produktstrom deren Anteile bestimmen, mit vorgegebenen Sollwerten verglichen. Eventuelle Abweichungen bilden die Eingangsgrößen für ein entsprechendes Stellglied der Regeleinheit 13, welches dann den Mengenstrom im Sinne der gewünschten Produktzusammensetzung verändert.

Durch die Rückführung der gasförmigen Komponente wird der Gasraum im Reaktor gegenüber dem Pyrolysebad abgekühlt. Dadurch werden die Abbaureaktionen des Pyrolysegutes mit der Folge einer verbesserten Produktqualität verlangsamt oder sogar unterbunden.

Die während der Pyrolyse entstehenden flüchtigen Bestandteile bilden zusammen mit dem über die Gasrückführung in den Reaktor geleiteten Gas und dem inerten Spülgas, beispielsweise Stickstoff, den Gasraum über dem Pyrolysebad. Die Temperatur im Gasraum wird vorzugsweise bei 200 bis 250°C gehalten, so daß sich ein Temperaturgradient zwischen dem Pyrolysebad und dem darüber liegenden Gasraum ergibt. Diese Konzeption führt dazu, daß die aus dem Pyrolysebad austretenden flüchtigen Bestandteile des Produktgemisches schnell auf die niedrigere Temperatur abgekühlt werden und dadurch die Abbaureaktion der organischen Verbindungen, die aus dem zu pyrolysierenden Gut entstehen, abrupt zum Stillstand gebracht oder zumindest deren Geschwindigkeit reduziert wird.

Ein Teil des gasförmigen Produktgemisches kann für die Heizung des Pyrolysebades im Reaktor selbst eingesetzt werden.

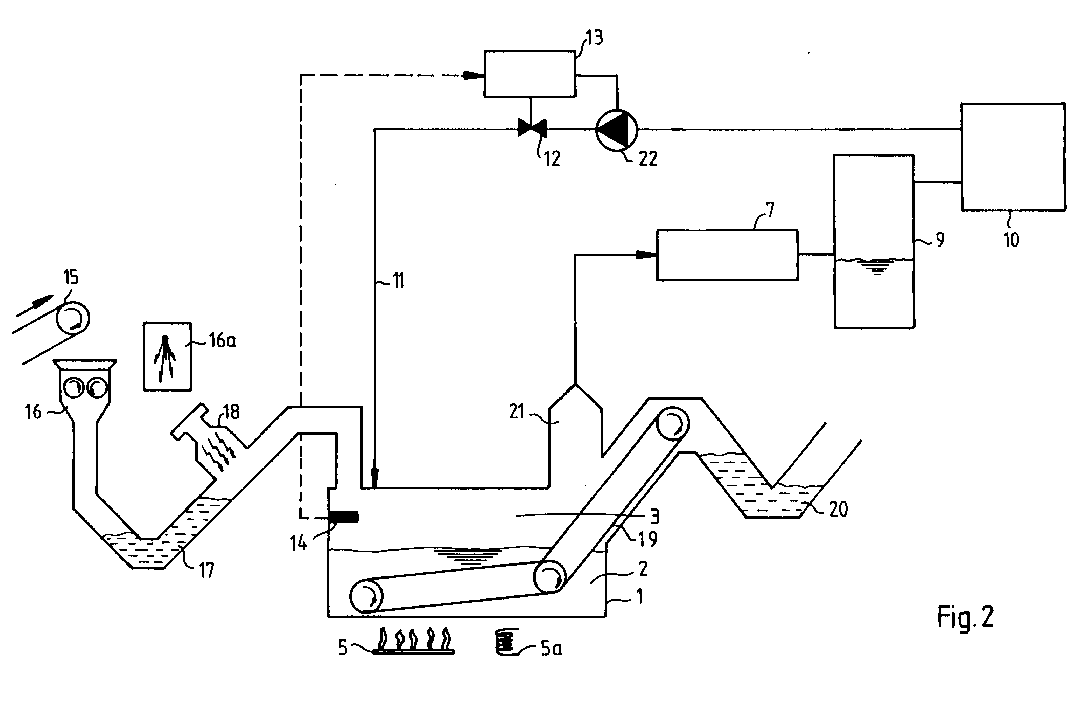

In Figur 2 ist eine andere bevorzugte Ausführungsform der erfindungsgemäßen Vorrichtung dargestellt.

Die Fahrzeugreifen oder anderen organischen Abfallstoffe werden zunächst über eine Transportvorrichtung 15, beispielsweise ein Transportband in die Zerkleinerungsanlage 16 gegeben, in der die gebrauchten Fahrzeugreifen durch eine Shredder- oder Schneidevorrichtung in kleine Teile zerstückelt werden. Alternativ können die Fahrzeugreifen auch durch eine Laservorrichtung 16a zerkleinert werden.

Die Reifenabschnitte passieren anschließend eine gasdichte Durchführung 17, um den Luftzutritt zum Pyrolyseraum zu verhindern. Hierfür kann beispielsweise ein Ölbad eingesetzt werden. Dadurch wird gewährleistet, daß das Produktgemisch nicht mit Kohlenmonoxid, Kohlendioxid, Wasser oder anderen Oxidationsprodukten verunreinigt wird. Es resultiert eine maximale Menge des erwünschten Produktgemisches.

Danach durchlaufen die Reifenabschnitte eine Vorwärmzone 18, in der die Teile auf eine Temperatur von etwa 180°C erwärmt werden. Dies ermöglicht eine größere Homogenität des Pyrolysebades durch gezielte Zuführung der Reifenabschnitte mit einer erhöhten Temperatur. Durch diese bevorzugte Maßnahme ist die Temperatur im Pyrolysebad sehr viel einfacher konstant zu halten, so daß auch veränderliche Mengenströme des zu pyrolysierenden Gutes nicht zu schwankenden Temperaturen im Pyrolysebad führen und damit die Produktqualität konstant bleibt. Auch in diesem Fall kann die Vorwärmung des Gutes entweder indirekt über eine Erwärmung von außen oder durch eine Energiezufuhr über ein Magnetron vom Inneren des Pyrolysegutes heraus erfolgen.

Das vorgewärmte Gut gelangt anschließend in den Reaktor 1, in dem sich das Pyrolysebad 2 in Kontakt mit einem Gasraum 3 befindet. Der Reaktor wird kontinuierlich mit einem inerten Gas, vorzugsweise mit Stickstoff, gespült, um völlig sauerstoff- und wasserfrei arbeiten zu können. Der Reaktionsraum wird außerdem durch ein Pumpensystem ständig unter partiellem Vakuum, vorzugsweise bei etwa 100 mBar, gehalten. Allerdings können auch andere Werte zwischen im wesentlichen 80 und 150 mBar eingestellt werden.

Auch in diesem Fall kann entweder ein Metallbad, vorzugsweise ein Zinn-, Zinn/Blei- oder Zinn/Zinkbad, eingesetzt werden.

Die Erwärmung des Pyrolysebades erfolgt von außen über ein Brennersystem 5, in dem beispielsweise ein Teil des erhaltenen Produktgases verbrannt wird. Außerdem kann die Erhitzung über eine elektrische Heizung 5a erfolgen. Die Temperatur des Pyrolysebades wird wiederum im Bereich zwischen 450 und 550°C, vorzugsweise unter 500°C und in einer optimierten Variante zwischen 475 und 485°C, eingestellt.

Unter den gewählten Verfahrensparametern wird der in den Fahrzeugreifen enthaltene Schwefel nicht gebunden, sondern sublimiert und reichert sich in der Ölphase des Produktgemisches an. Dadurch ist eine einfache Abtrennung dieser Verunreinigung ohne aufwendige Reinigung und Aufarbeitung möglich.

Der bei der Pyrolyse entstehende Kohlenstoff setzt sich ebenso wie die Verstärkungsmaterialien der Fahrzeugreifen auf einer Transporteinrichtung 19 am Boden des Reaktors ab. Diese Feststoffe werden durch eine gasdichte Durchführung 20 aus dem Reaktor herausgeführt und anschließend abgekühlt. Der Kohlenstoff wird von den übrigen nicht schmelzenden Bestandteilen abgetrennt und anschließend getrocknet. Er enthält typischerweise mindestens 95% Kohlenstoff, 0,2 bis 0,5% Schwefel, 1,5% höchstsiedende Kohlenwasserstoffe und gegebenenfalls geringe Anteile von Asphalt. Wegen der hohen Reinheit läßt sich das zurückgewonnene Produkt daher ohne weiteres in vielen Anwendungen wie ein Original-Rohstoff verwenden.

Die Temperatur im Gasraum über dem Pyrolysebad wird bei 200 bis 250°C gehalten. Die flüchtigen Bestandteile des Produktgemisches werden über den Dom 21 in den Kondensator 7 geleitet, in dem die hochsiedenden organischen Bestandteile abgetrennt werden. Diese Fraktion ist weitgehend frei von höchstsiedenden Kohlenwasserstoffen. Die im Kondensator erzeugte Abwärme kann für die Trocknung des in dem Separator erhaltenen Kohlenstoffs eingesetzt werden. Die verbleibende flüchtige Fraktion wird in einen Separator 9 geleitet, der die gasförmigen Verbindungen Methan und Ethan von den flüssigen Produkten trennt. Man erhält in der Flüssigfraktion typischerweise eine Mischung von etwa 30% Benzin mit einem Siedepunkt von weniger als 180°C, 30 bis 35 % Kerosin mit einem Siedepunkt von über 180°C und bis zu 40% Leicht- und Mittelöle. Das Gasgemisch enthält Methan und Ethan im Verhältnis von etwa 8 zu 1. In der Gasphase befindet sich außerdem eine geringe Menge Stickstoff, der dem Reaktor als Inertgas zugeführt wird.

Entsprechend der Erfindung wird der gasförmige Anteil des Produktgemisches über eine Zuführung 11 in den Gasraum 3 über dem Pyroylsebad 2 mittels einer Pumpe 22 zurückgeleitet. Der Mengenstrom des Gases kann über eine Regeleinheit 13 gesteuert werden. Je nach gewünschtem Druck oder eingestellter Temperatur des Gasraumes über dem Pyrolysebad und erhaltener Produktzusammensetzung wird der Volumenstrom über die Pumpe variiert. Hierzu kann die Leistung der Pumpe geregelt werden. Eine andere Möglichkeit besteht darin, den Volumenstrom über das Ventil 12 einzustellen. Die Regelung erfolgt durch Messung des Drucks bzw. der Temperatur im Gasraum im Reaktor mittels des Sensors 14.

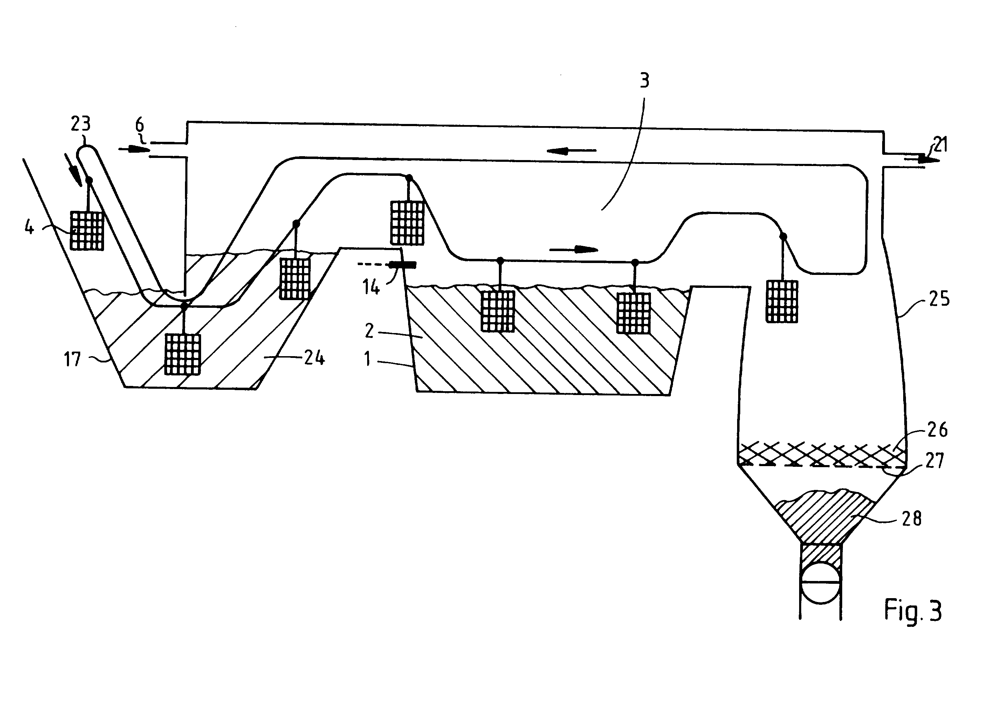

In Figur 3 ist eine dritte bevorzugte Ausführungsform der erfindungsgemäßen Vorrichtung dargestellt.

Die zerkleinerten Abschnitte der organischen Abfallstoffe werden in Körbe 4 gefüllt, die an einem Transportband 23 hängen. Zunächst erfolgt eine Vorwärmung des Pyrolysegutes auf eine Temperatur unter 100°C. Die Körbe werden danach durch eine gasdichte Schleuse 17, die vorzugsweise mit dem Öl 24 gefüllt ist, in den Reaktionsraum hineingeführt. Für eine weitere Temperierung der organischen Abfallstoffe kann das Öl auf eine erhöhte Temperatur aufgeheizt werden. Für die Ölfüllung können vorzugsweise die hochsiedenden Anteile des Produktgemisches verwendet werden. Dadurch wird das durch die Körbe ins Innere des Reaktors hineingeschleppte Öl verdampft und wird mit den übrigen Produktgasen zusammengeführt. Auf diese Weise ergibt sich ein geschlossener Kreislauf des Öls.

Die mit dem Pyrolysegut gefüllten Körbe werden danach in den Reaktor 1 überführt und dort in das Pyrolysebad 2 eingetaucht. Die im Pyrolysebad eingestellte Temperatur entspricht der in den vorangegangenen Beispielen angegebenen Werten. Der Druck im Gasraum 3 liegt im Bereich zwischen 600 und 1000 mBar und vorzugsweise bei im wesentlichen 800 mBar. Durch die Pyrolysereaktion werden die organischen Abfallstoffe zersetzt. Zurück bleiben der Kohlenstoff und gegebenenfalls die in den Abfallstoffen enthaltenen Füllstoffe, wie beispielsweise Stahlgewebe-Einlagen.

Nach dem Durchlaufen des Reaktionsraumes werden die Körbe in einen Feststoffabscheider 25 überführt, in dem die Körbe durch eine geeignete Vorrichtung automatisch entleert werden. Die Feststoffe fallen auf einen Siebboden 27, auf dem die größeren Teile 26, beispielsweise die Füllstoffe, liegenbleiben. Stahlgewebe kann von dem Siebboden unter anderem mit Hilfe von Magneten entfernt werden. Der pulverförmige Kohlenstoff 28 fällt durch den Siebboden hindurch und sammelt sich im unteren Teil des Feststoffabscheiders. Die (nicht dargestellten) entleerten Körbe werden am Transportband durch die Anlage zurückgeführt.

Das entstehende Produktgas wird zusammen mit dem gegebenenfalls zur Spülung des Gasraumes eingeleiteten Inertgas durch den Auslaß 21 hinausgeführt, wo entsprechend der in Figur 1 angegebenen Vorrichtung zunächst eine Abkühlung des Produktgemisches in einem Kondensator und anschließend eine Kondensation in einer Kühlkolonne vorgenommen wird. Die kondensierten Anteile werden in einem Behälter aufgefangen, während die gasförmigen Anteile in einen Gasometer gelangen, in dem sie zwischengespeichert werden.

Entsprechend der Erfindung wird auch in diesem Fall ein Teil der gasförmigen Anteile des Produktgemisches über eine Rückführung über den Einlaß 6 wieder in den Gasraum im Reaktor zurückgeleitet. Der Volumenstrom des zurückgeleiteten Gases wird über ein Ventil geregelt. Als Regelungsparameter dienen entweder der Druck oder die Temperatur im Gasraum oder die erhaltene Produktzusammensetzung. Der Druck bzw. die Temperatur können über einen Sensor 14, der in Höhe des Gasraumes im Reaktor angebracht ist, kontinuierlich ermittelt werden. Die Bestimmung der Produktzusammensetzung erfolgt in der oben angegebenen Weise. Alternativ kann der Volumenstrom der Rückleitung des Gases auch über die Leistung einer Pumpe geregelt werden, die das Gas fördert.

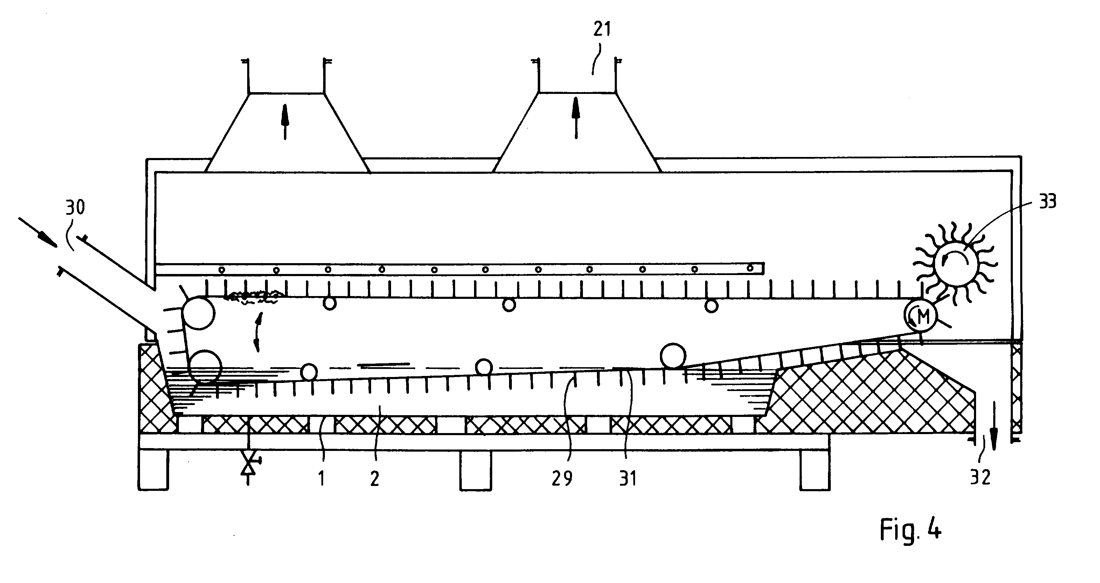

In Figur 4 ist eine weitere Ausführungsform der erfindungsgemäßen Vorrichtung dargestellt. Das in einzelne Abschnitte zerkleinerte Pyrolysegut wird über den Einlaß 30 in den Reaktor 1 eingebracht und gelangt dort in das Pyrolysebad 2. Im Unterschied zu der in Figur 3 gezeigten Vorrichtung erfolgt der Transport der Reifenabschnitte bzw. der Feststoffreste im Pyrolysebad durch ein Förderband 31, an dem in vorgegebenen Abständen Vorrichtungen 29 angebracht sind, die senkrecht von dem Förderband abstehen und das Pyrolysegut bzw. die daraus entstehenden Feststoffreste im Metallbad vorwärts treiben. Die Druck- und Temperaturbedingungen im Reaktor entsprechen den in den vorangegangenen Ausführungsformen beschriebenen Bedingungen.

Die gasförmigen Produkte werden über den Dom 21 abgeführt und entsprechend der in Figur 2 und Figur 3 dargestellten Vorrichtung weiter verarbeitet.

Entsprechend der Erfindung wird auch in diesem Fall ein Teil der gasförmigen Anteile des Produktgemisches über eine Rückführung wieder in den Gasraum im Reaktor zurückgeleitet. Der Volumenstrom des zurückgeleiteten Gases wird in Abhängigkeit vom Druck oder der Temperatur im Gasraum oder der erhaltenen Produktzusammensetzung eingestellt. Es gelten die gleichen Verfahrensbedingungen, die im Zusammenhang mit den vorangegangenen Ausführungsformen bereits erläutert wurden.

Die zurückbleibenden Feststoffe gelangen über den Schacht 32 in eine Feststoff-Nachbehandlungsanlage. Hierzu werden das Förderband 31 und die Vorrichtungen 29 mittels einer Reinigungsbürste 33 gereinigt, indem die Feststoffe abgestreift werden.

In der Feststoff-Nachbehandlungsanlage wird der neben Kohlenstoff auch Metallteile enthaltende Feststoff zunächst in einer Grobmühle gemahlen. Anschließend werden die Metallteile über einen Magnetabscheider aus dem Gemisch entfernt und der Kohlenstoff anschließend über ein Sieb geleitet. Danach erfolgt ein Feinmahlvorgang.

### Beispiel:

In der in Figur 1 dargestellten Vorrichtung wird die Pyrolyse von unterschiedlichen Reifentypen bei einer Pyrolysetemperatur von 475 bis 485°C durchgeführt. Die Pyrolyse wird in einem Blei/Zinn- bzw. einem Zinn/Zinkbad der Zusammensetzung 40:60 bzw. 90:10 durchgeführt. Es entstehen eine Öl-, eine Gas- und eine Kohlenstoff-Fraktion.

Über verschiedene Reifentypen gemittelt wird die Prozeßführung derart gewählt, daß die folgende Zusammensetzung der Produktanteile in der Atmosphäre über dem Metallbad entalten wird:

| Siedepunkt | Volumenanteil |
|---|---|
| bis 180°C | 20 bis 27% |
| bis 240°C | 5 bis 18% |
| bis 300°C | 10 bis 25% |
| bis 350°C | 10 bis 20% |
| bis 400°C | 20 bis 25% |
| über 400°C | 10 bis 15% |

Der Anteil ungesättigter Verbindungen ist hoch und beträgt 80 bis 90% (Alkene, substituierte Aromaten und andere). Der Restanteil besteht aus gesättigten Verbindungen (Alkane und Paraffine). Der Schwefelanteil in den niedrigsiedenden Fraktionen beträgt ≦0,2%, der Wassergehalt ≦2%.

In einer pyrolysierten Reifenprobe wurde das folgende Gasgemisch erhalten:

| Siedepunkt | Volumenanteil |
|---|---|
| bis 180°C | 25 Vol.-% |
| bis 240°C | 15 Vol.-% |
| bis 300°C | 18 Vol.-% |
| bis 350°C | 12 Vol.-% |
| bis 400°C | 20 Vol.-% |
| über 400°C | 10 Vol.-% |

Die Gasfraktion besteht weitgehend aus Alkanen sowie geringen Anteilen von Alkenen und Wasserstoff sowie Spuren von Mercaptoverbindungen:

| | |
|---|---|
| Methan | 70 bis 85 Vol.-% |
| Ethan, Ethen | 10 bis 15 Vol.-% |
| Propan, Propen | 2 bis 5 Vol.-% |
| Wasserstoff | 0 bis 5 Vol.-%. |

In einer pyrolysierten Reifenprobe wurde das folgende Gasgemisch erhalten:

| | |
|---|---|
| Methan | 75 Vol.-% |
| Ethan, Ethen | 10 bis 25 Vol.-% |
| Propan, Propen | 2 bis 5 Vol.-% |
| Wasserstoff | 5 Vol.-% |

Die Kohlenstoff-Fraktion setzt sich nach Entfernung des Stahls folgendermaßen zusammen:

| | |
|---|---|
| Kohlenstoff | 80 bis 95% |
| Mineralische Bestandteile | 3 bis 15% |
| Höchstsiedende Kohlenwasserstoffe | 3 bis 10% |
| Wasser | 1 bis 3% |

Die Erfindung beschränkt sich in ihrer Ausführung nicht auf das vorstehend angegebene bevorzugte Ausführungsbeispiel. Vielmehr ist eine Anzahl von Varianten denkbar, die von den Ansprüchen der Anmeldung umfaßt werden.

## Patentansprüche

1. Verfahren zur Aufbereitung von zerkleinerten organischen Abfallstoffen, insbesondere Gummiabfällen - wie gebrauchten Fahrzeugreifen -, durch Pyrolyse unter reduziertem Druck und Ausschluß von Luft und Wasser, wobei
die zerkleinerten Abfallstoffe in einem Pyrolysebad zersetzt werden,
mindestens ein Teil der entstehenden flüchtigen Bestandteile über dem Bad aufgefangen und zur weiteren Verwertung weggeführt wird, **dadurch gekennzeichnet,** daß
in den Gasraum über dem Pyrolysebad mindestens ein Anteil der niedermolekularen Anteile der flüchtigen Bestandteile über eine Gasrückführung zurückgeführt wird und wahlweise kontinuierlich oder intermittierend ein Inertgas, vorzugsweise Stickstoff, eingeleitet wird,
und das Pyrolysebad aus einem Metallbad besteht und die Temperatur im Pyrolysebad auf einen Wert im Bereich von 450 und 550°C, vorzugsweise unterhalb von 500°C und inbesondere zwischen 475 und 485°C eingestellt wird.

2. Verfahren nach Anspruch 1, **dadurch gekennzeichnet,** daß die Menge des Volumenstroms der Gasrückführung in Abhängigkeit vom Druck im Gasraum über dem Pyrolysebad, in Abhängigkeit von der Temperatur im Gasraum über dem Pyrolysebad und/oder über einen oder mehrere Meßwerte der Volumen- oder Produktzusammensetzung des durch Pyrolyse erhaltenen Stoffgemisches geregelt wird.

3. Verfahren nach einem der vorhergehenden Ansprüche, **dadurch gekennzeichnet,** daß die Temperatur im Gasraum über dem Pyrolysebad auf einen Wert im Bereich von 200 und 280°C eingestellt wird.

4. Verfahren nach Anspruch 1, **dadurch gekennzeichnet,** daß das Metallbad aus den Elementen Zinn, Blei oder Zink bzw. einer Mischung dieser Elemente besteht.

5. Verfahren nach Anspruch 4, **dadurch gekennzeichnet,** daß als Metallbad eine Mischung der Metalle Zinn und Blei im Massenverhältnis von im wesentlichen 60% Zinn und 40% Blei oder eine Mischung der Metalle Zinn und Zink im Massenverhältnis von im wesentlichen 90% Zinn und 10% Zink verwendet wird.

6. Verfahren nach einem der vorhergehenden Ansprüche, **dadurch gekennzeichnet,** daß die Pyrolyse unter vermindertem Druck erfolgt.

7. Verfahren nach einem der vorhergehenden Ansprüche, **dadurch gekennzeichnet,** daß die Pyrolyse unter Sauerstoff-, Luft- und/oder Wasserausschluß erfolgt.

8. Verfahren nach einem der vorangehenden Ansprüche, **dadurch gekennzeichnet,** daß die Regelung der Menge des Volumenstroms der Gasrückführung derart erfolgt, daß der Anteil der hochmolekularen Anteile der flüchtigen Bestandteile maximiert ist.

9. Verfahren nach einem der vorangehenden Ansprüche, **dadurch gekennzeichnet,** daß die Regelung der Menge des Volumenstroms der Gas(rück)führung derart erfolgt, daß die Menge der entstehenden flüchtigen Bestandteile maximiert ist.

10. Verfahren nach einem der vorangehenden Ansprüche, **dadurch gekennzeichnet,** daß die Regelung der Menge des Volumenstroms der Gas(rück)führung derart erfolgt, daß die Menge des entstehenden Kohlenstoffs minimiert ist.

11. Vorrichtung zur Durchführung des Verfahrens nach einem der vorangehenden Ansprüche, mit
- einem Reaktor (1) zur Durchführung der Pyrolyse mit einem Metallbad (2) und einem darüberliegenden Gasraum (3) sowie
- einer Gasleitung (11) zur Rückführung mindestens eines Anteils der niedermolekularen Anteile der flüchtigen Bestandteile über eine Gasrückführung und/oder des Inertgases in den Gasraum (3), wobei die Gasleitung eine Pumpe (22) und/oder ein Ventil (12) aufweist, das/die von der Regeleinheit (13) ansteuerbar ist/sind.

12. Vorrichtung nach Anspruch 11, **dadurch gekennzeichnet**, daß Mittel zur Erfassung von Druck bzw. Temperatur des Gasraumes (3) über dem Pyrolysebad und/oder der anteiligen Zusammensetzung des Produktgemisches als Regelgrößen zur Regelung des volumenstromes vorgesehen sind.

13. Vorrichtung nach einem der Ansprüche 11 oder 12, **dadurch gekennzeichnet,** daß eine Fördervorrichtung (4, 23; 31, 33) vorgesehen ist, welche die in dem Pyrolysebad (2) aufschwimmenden organischen Abfälle in dem Pyrolysebad unter Benetzung eingetaucht voranbewegt.

14. Vorrichtung nach Anspruch 13, **dadurch gekennzeichnet,** daß die Vorrichtung als Transportbehältnisse Drahtkörbe und/oder Käfige (4) aufweist.

15. Vorrichtung nach einem der Ansprüche 11 bis 14, **gekennzeichnet durch** eine dem Pyrolysebad vorgeordnete Flüssigkeitsschleuse (17) zur Trennung der Atmosphäre über dem Pyrolysebad von der äußeren Atmosphäre.

16. Vorrichtung nach Anspruch 15, **dadurch gekennzeichnet,** daß die Schleuse aus einem weiteren Bad (17) besteht, welches in seiner Zusammensetzung derjenigen des Pyrolysebades (2) entspricht.

17. Vorrichtung nach einem der Ansprüche 11 bis 16, **dadurch gekennzeichnet,** daß dem Pyrolysebad mindestens eine Mühle nachgeordnet ist, welche zur weiteren Zerkleinerung der aus dem Pyrolysebad herausgeführten Reste der organischen Abfallteile dient.

18. Vorrichtung nach Anspruch 17, **dadurch gekennzeichnet,** daß der Mühle ein Magnetabscheider nachgeordnet ist.

## Claims

1. A process for the preparation of ground organic waste material, especially waste rubber - such as car tyres - via pyrolysis under reduced pressure and with the exclusion of air and water, wherein
the ground waste material is broken down in a pyrolysis bath,
at least a part of the resulting volatile components are collected over the bath and transported for further evaluation,
**characterised in that**
in the gas chamber, above the pyrolysis bath, at least a proportion of those volatile components having a low molecular weight are fed back via a means of gas return, and that an inert gas, preferably nitrogen, can be fed in either continually or intermittently, and that the pyrolysis bath consists of a metal bath, and the temperature in the pyrolysis bath is set at a value in the region of 450 and 550 °C, preferably below 500 °C and especially between 475 and 485 °C.

2. A process according to claim 1,
**characterised in that** the quantity of the gas return volume stream is controlled in dependence on the pressure in the gas chamber above the pyrolysis bath, in dependence on the temperature in the gas chamber above the pyrolysis bath and / or via one or more measured values of the volume or product composition of the material mixture obtained via pyrolysis.

3. A process according to one of the preceding claims,
**characterised in that** the temperature in the gas chamber above the pyrolysis bath is set to a value in the region of 200 and 280 °C.

4. A process according to claim 1,
**characterised in that** the metal bath is constructed from the elements tin, lead or zinc, or a mixture of these elements.

5. A process according to claim 4,
**characterised in that** for the metal bath, a mixture of the metals tin and lead in a mass ratio of substantially 60% tin and 40% lead, or a mixture of the metals tin and zinc in a mass ratio of substantially 90% tin and 10% zinc is used.

6. A process according to one of the preceding claims,
**characterised in that** the pyrolysis takes place under reduced pressure.

7. A process according to one of the preceding claims,
**characterised in that** oxygen, air and / or water are excluded during pyrolysis.

8. A process according to one of the preceding claims,
**characterised in that** control of the quantity of the gas return volume stream takes place in such a way that the proportion of volatile components which have a high molecular weight is maximised.

9. A process according to one of the preceding claims,
**characterised in that** control of the quantity of the gas (return) volume stream takes place in such a way that the quantity of resultant volatile components is maximised.

10. A process according to one of the preceding claims,
characterised in that control of the quantity of the gas (return) volume stream takes place in such a way that the quantity of resultant carbon is minimised.

11. Apparatus for implementing the process according to one of the preceding claims, comprising
- a reactor (1) for implementation of the pyrolysis with a metal bath (2) and a gas chamber (3) positioned above the metal bath, and
- a gas supply (11) for returning at least a proportion of those volatile components having a low molecular weight via a gas return and / or the inert gas in the gas chamber (3) wherein the gas supply comprises a pump (22) and / or a valve (12) which can be controlled from the control unit (13).

12. Apparatus according to claim 11,
**characterised in that** means are provided for recording pressure, or temperature of the gas chamber (3) above the pyrolysis bath and / or the proportional composition of the product mixture as a control variable for regulating the volume stream.

13. Apparatus according to one of claims 11 or 12,
**characterised in that** a conveyor apparatus (4, 23; 31, 33) is provided which conveys the organic waste that floats in the pyrolysis bath (2), wetted and submerged in the pyrolysis bath.

14. Apparatus according to claim 13,
**characterised in that** the apparatus comprises wire baskets and / or cages (4) which are used as transport containers.

15. Apparatus according to one of claims 11 to 14,
**characterised in that** a liquid sluice (17) is provided before the pyrolysis bath to separate the atmosphere above the pyrolysis bath from the outer atmosphere.

16. Apparatus according to claim 15,
**characterised in that** the sluice consists of an additional bath (17), the composition of which corresponds to that of the pyrolysis bath (2).

17. Apparatus according to one of claims 11 to 16,
**characterised in that** at least one mill is provided after the pyrolysis bath which serves to grind the remnants of organic waste from the pyrolysis bath still further.

18. Apparatus according to claim 17,
**characterised in that** a magnet separator is provided after the mill.

## Revendications

1. Procédé pour traiter des déchets organiques broyés, en particulier des déchets de pneumatiques, tels que des pneumatiques de véhicule automobile usagés, par pyrolyse sous pression réduite et à l'abri de l'air et de l'eau, dans lequel les déchets broyés sont décomposés dans un bain de pyrolyse, au moins une partie des constituants volatils formés est captée au-dessus du bain et évacuée pour la suite de la valorisation, caractérisé en ce que, dans le compartiment de gaz au-dessus du bain de pyrolyse, au moins une portion des parties de faible masse moléculaire des constituants volatils est recyclée par l'intermédiaire d'un recyclage de gaz, et un gaz inerte, de préférence l'azote, est introduit au choix de manière continue ou intermittente, et le bain de pyrolyse consiste en un bain de métal et la température dans le bain de pyrolyse est ajustée à une valeur dans le domaine de 450 à 550°C, de préférence inférieure à 500°C et en particulier entre 475 et 485°C.

2. Procédé selon la revendication 1, caractérisé en ce que le débit du courant volumique du recyclage de gaz est régulé en fonction de la pression dans le compartiment de gaz au-dessus du bain de pyrolyse, en fonction de la température dans le compartiment de gaz au-dessus du bain de pyrolyse et/ou par le biais d'une ou plusieurs valeurs mesurées de la composition volumique ou de produits du mélange de substances obtenu par pyrolyse.

3. Procédé selon l'une des revendications précédentes, caractérisé en ce que la température dans le compartiment de gaz au-dessus du bain de pyrolyse est ajustée à une valeur dans le domaine de 200 à 280°C.

4. Procédé selon la revendication 1, caractérisé en ce que le bain de métal consiste en l'élément étain, plomb ou zinc ou en un mélange de ces éléments.

5. Procédé selon la revendication 4, caractérisé en ce que l'on utilise comme bain de métal un mélange des métaux étain et plomb dans le rapport massique de sensiblement 60 % d'étain et 40 % de plomb ou un mélange des métaux étain et zinc dans le rapport massique de sensiblement 90 % d'étain et 10 % de zinc.

6. Procédé selon l'une des revendications précédentes, caractérisé en ce que la pyrolyse a lieu sous pression réduite.

7. Procédé selon l'une des revendications précédentes, caractérisé en ce que la pyrolyse a lieu à l'abri de l'oxygène, de l'air et/ou de l'eau.

8. Procédé selon l'une des revendications précédentes, caractérisé en ce que la régulation du débit du courant volumique du recyclage de gaz a lieu de telle manière que la portion des parties de haute masse moléculaire des constituants volatils est maximisée.

9. Procédé selon l'une des revendications précédentes, caractérisé en ce que la régulation du débit du courant volumique du (re)cyclage de gaz a lieu de telle manière que la quantité des constituants volatils formés est maximisée.

10. Procédé selon l'une des revendications précédentes, caractérisé en ce que la régulation du débit du courant volumique du (re)cyclage de gaz a lieu de telle manière que la quantité du carbone formé est minimisée.

11. Dispositif pour la mise en oeuvre du procédé selon l'une des revendications précédentes, avec
- un réacteur (1) pour la mise en oeuvre de la pyrolyse avec un bain de métal (2) et un compartiment de gaz (3) situé au-dessus et
- une conduite de gaz (11) pour le recyclage dans le compartiment de gaz (3) d'au moins une portion des parties de faible masse moléculaire des constituants volatils par l'intermédiaire d'un recyclage de gaz et/ou du gaz inerte, la conduite de gaz comportant une pompe (22) et/ou une vanne (12) qui peuvent être commandées par l'unité de régulation (13).

12. Dispositif selon la revendication 11, caractérisé en ce qu'il est prévu des moyens pour capter la pression et la température du compartiment de gaz (3) au-dessus du bain de pyrolyse et/ou la composition proportionnée du mélange de produits en tant que grandeurs de régulation pour la régulation du courant volumique.

13. Dispositif selon l'une des revendications 11 et 12, caractérisé en ce qu'il est prévu un dispositif transporteur (4, 23 ; 31, 33) qui déplace de manière immergée et avec mouillage dans le bain de pyrolyse les déchets organiques qui sumagent dans le bain de pyrolyse (2).

14. Dispositif selon la revendication 13, caractérisé en ce que le dispositif comporte comme récipients de transport des corbeilles en fil métallique et/ou des cages (4).

15. Dispositif selon l'une des revendications 11 à 14, caractérisé par un sas à liquide (17) prévu en amont du bain de pyrolyse pour la séparation de l'atmosphère au-dessus du bain de pyrolyse d'avec l'atmosphère extérieure.

16. Dispositif selon la revendication 15, caractérisé en ce que le sas consiste en un bain supplémentaire (17) dont la composition correspond à celle du bain de pyrolyse (2).

17. Dispositif selon l'une des revendications 11 à 16, caractérisé en ce qu'au moins un broyeur qui sert au broyage supplémentaire des restes des parties de déchets organiques évacués du bain de pyrolyse est disposé en aval du bain de pyrolyse.

18. Dispositif selon la revendication 17, caractérisé en ce qu'un séparateur magnétique est disposé en aval du broyeur.
